(19) **Europäisches Patentamt / European Patent Office / Office européen des brevets**

(11) **EP 2 302 411 B1**

(12) **FASCICULE DE BREVET EUROPEEN**

(45) Date de publication et mention
de la délivrance du brevet:
**07.10.2015 Bulletin 2015/41**

(51) Int Cl.:
*G01S 13/87* (2006.01)    *G01S 13/93* (2006.01)
*G01S 13/28* (2006.01)    *G01S 13/44* (2006.01)
*G01S 13/58* (2006.01)

(21) Numéro de dépôt: **10290487.7**

(22) Date de dépôt: **13.09.2010**

(54) **Procédé et système d'évitement d'un engin d'interception par un mobile aérien**

Verfahren und System zur Vermeidung einer Abfangmaschine durch ein Luftfahrzeug

Method and system for an airborne mobile to avoid an intercepting vehicle

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **17.09.2009 FR 0904441**

(43) Date de publication de la demande:
**30.03.2011 Bulletin 2011/13**

(73) Titulaire: **MBDA France
75016 Paris (FR)**

(72) Inventeurs:
• **Poirier, Serge
92130 Issy-Les-Moulineaux (FR)**
• **Michaud, Frédéric
75015 Paris (FR)**

(74) Mandataire: **Hauer, Bernard
Gevers France
41, avenue de Friedland
75008 Paris (FR)**

(56) Documents cités:
WO-A1-2008/134815        US-A- 5 047 779
US-A- 5 552 788          US-A- 6 147 638
US-A1- 2006 012 511      US-A1- 2008 100 493
US-A1- 2009 040 097

• **HERMANN ROHLING ET AL: "Radar waveform for
automotive radar systems and applications",
RADAR CONFERENCE, 2008. RADAR '08. IEEE,
IEEE, PISCATAWAY, NJ, USA, 26 mai 2008
(2008-05-26), pages 1-4, XP031376469, ISBN:
9781424415380**

EP 2 302 411 B1

**Description**

La présente invention concerne un procédé et un système pour l'évitement d'un engin d'interception par un mobile aérien, ainsi qu'un mobile aérien équipé d'un tel système d'évitement.

La présente invention est tout particulièrement bien adaptée, quoique non exclusivement, aux mobiles aériens autonomes, par exemple du type missile.

On sait qu'il existe de nombreux moyens de défense, notamment du type missile anti-missile, qui sont destinés à intercepter et à détruire des mobiles aériens au cours de leur vol, avant que ceux-ci n'aient pu remplir leur mission.

La présente invention a pour objet de permettre à un mobile aérien d'éviter un engin volant assaillant qui le menace de destruction.

A cette fin, selon l'invention, le procédé d'évitement d'un engin volant d'interception par un mobile aérien, ledit mobile aérien comportant :

- des moyens automatiques de pilotage ;
- des antennes d'émission et de réception de signaux électromagnétiques, dites antennes de détection, aptes à émettre des signaux électromagnétiques sous la forme d'un faisceau d'ondes électromagnétiques orienté vers l'avant dudit mobile aérien ;
- au moins une antenne d'altimétrie pour la mesure de la hauteur dudit mobile aérien au-dessus du sol ; et
- une chaîne d'émission - réception partagée entre les antennes de détection et l'au moins une antenne d'altimétrie,

procédé selon lequel on effectue automatiquement les étapes suivantes :

- on émet vers l'avant dudit mobile aérien, à l'aide d'au moins une desdites antennes de détection, au moins un signal électromagnétique dont la fréquence est temporellement modulée ;
- on reçoit, à l'aide d'au moins une desdites antennes de détection, au moins un signal électromagnétique réfléchi, qui correspond à la réflexion dudit signal électromagnétique émis sur ledit engin volant ;
- à partir desdits signaux électromagnétiques émis et réfléchi, on forme au moins un signal d'analyse, dont la fréquence correspond à l'écart de fréquences entre les fréquences desdits signaux émis et réfléchi ;
- on effectue une analyse spectrale dudit signal d'analyse pour déterminer au moins une valeur dudit écart de fréquences et pour éliminer l'écho de sol ;
- à partir de ladite valeur déterminée dudit écart de fréquences déterminée, on calcule la valeur d'au moins un paramètre d'évolution dudit engin d'interception par rapport audit mobile aérien ; et
- on évalue la direction d'arrivée dudit engin par rapport audit mobile aérien,

est remarquable :

- en ce que ledit signal électromagnétique émis est un signal sinusoïdal découpé en impulsions, dont la fréquence varie linéairement en fonction du temps selon une loi de modulation prédéterminée, de sorte que ledit signal électromagnétique réfléchi est également un signal sinusoïdal découpé en impulsions, dont la fréquence varie selon la même loi de modulation prédéterminée ; et
- en ce que l'on effectue exclusivement une des étapes suivantes :

  ▪ à partir au moins de la valeur déterminée dudit paramètre d'évolution et de la direction d'arrivée dudit engin, on détermine un ordre d'évitement destiné auxdits moyens automatiques de pilotage, de sorte que ledit mobile aérien réalise automatiquement une manoeuvre d'évitement dudit engin ;
  ▪ on mesure la hauteur dudit mobile aérien au-dessus du sol, à l'aide de ladite antenne d'altimétrie.

Ainsi, grâce à l'invention, puisque la détection d'un engin volant met en oeuvre des ondes électromagnétiques qui présentent l'avantage d'être peu sensibles aux conditions météorologiques, le mobile aérien peut déclencher, de façon automatique, une manoeuvre d'évitement de cet engin volant, afin de faire échouer une interception par ce dernier. De plus, le découpage en impulsions permet de faire alterner des périodes d'émission avec des périodes de silence durant lesquelles il est possible d'analyser le signal réfléchi sans être gêné par le signal émis.

On remarquera que le document antérieur WO2008/134815, qui décrit un procédé permettant à un avion sans pilote de prévenir toute collision avec un engin par une correction automatique de la trajectoire de celui-ci, se distingue nettement du procédé de la présente invention décrit préalablement.

En effet, même s'il divulgue les étapes d'émission vers l'avant d'un signal électromagnétique dont la fréquence est temporellement modulée, de réception du signal électromagnétique réfléchi par l'engin, d'évaluation de la direction d'arrivée de l'engin par rapport à l'avion et de détermination d'un ordre d'évitement de l'engin à partir notamment de la direction d'arrivée, on constate que ce document WO2008/134815 ne prévoit nullement la formation d'un signal d'analyse dont la fréquence correspond à l'écart de fréquences entre les fréquences de signaux émis et réfléchi. En outre, il ne peut mettre en oeuvre d'analyse spectrale du signal d'analyse, ce dernier n'étant pas formé. De plus, ce document ne divulgue aucune étape de calcul, à partir de l'écart de fréquences déterminé par analyse spectrale, d'un paramètre d'évolution (distance de séparation, vitesse radiale) d'un engin par rapport à l'avion.

Autrement dit, le document WO2008/134815 ne peut remettre en cause la brevetabilité de la présente invention.

On notera de plus que :

- les documents US 2008/0100493, US 2006/0012511, et l' article Hermann Rohling et al « Radar Waveform for Automotive Radar Systems » Radar Conference, 2008, IEEE Pixataway NJ USA décrivent des systèmes radar anticollision pour automobiles, et
- les documents US 6 147 638 et US2009/0040097 décrivent des systèmes radar de mesure de distances.

Par ailleurs, selon l'invention, préalablement à la formation du signal d'analyse, on transforme avantageusement chacun desdits signaux émis et réfléchi en un signal sinusoïdal continu, dont la fréquence varie linéairement en fonction du temps selon ladite loi de modulation.

De préférence :

- selon ladite loi de modulation prédéterminée, la fréquence varie en fonction du temps suivant une pente de modulation prédéfinie, pendant un premier intervalle temporel d'émission, et suivant l'opposé de ladite pente de modulation, pendant un second intervalle temporel d'émission ; et
- ledit écart de fréquences entre les fréquences desdits signaux émis et réfléchi varie au cours du temps et est défini par les relations suivantes :

  - $\Delta f1 = \dfrac{2aR}{c} + \dfrac{2Vr}{\lambda}$ sur au moins une partie dudit premier intervalle temporel ; et

  - $\Delta f2 = -\dfrac{2aR}{c} + \dfrac{2Vr}{\lambda}$ sur au moins une partie dudit second intervalle temporel,

  dans lesquelles :

    - a représente ladite pente de modulation ;
    - R correspond à la distance séparant ledit mobile dudit engin ;
    - c est égal à la célérité de la lumière ;
    - Vr représente la vitesse radiale relative dudit engin par rapport audit mobile ; et
    - $\lambda$ correspond à la longueur d'onde dudit signal émis.

De façon avantageuse, ladite analyse spectrale est une analyse par transformée de Fourier numérique rapide.

De préférence, pour évaluer la direction d'arrivée dudit engin par rapport audit mobile aérien, on détermine la direction du vecteur de Poynting associé audit signal réfléchi en estimant un premier angle, défini entre la direction dudit vecteur de Poynting et l'axe longitudinal dudit mobile aérien, et un second angle, défini entre la projection dudit vecteur Poynting sur un plan orthogonal à l'axe longitudinal dudit mobile aérien, passant par une desdites antennes de détection, et un axe de référence appartenant audit plan orthogonal.

En outre, dans un mode de réalisation particulier de l'invention :

- ledit mobile aérien comporte quatre antennes de détection ; et
- lesdites antennes de détection sont réparties régulièrement autour d'une même section transversale dudit mobile aérien.

La présente invention concerne également un système d'évitement d'un engin volant d'interception par un mobile aérien, ledit mobile aérien comportant des moyens automatiques de pilotage, des antennes d'émission et de réception de signaux électromagnétiques et au moins une antenne d'altimétrie pour la mesure de la hauteur dudit mobile aérien au-dessus du sol. Ledit système, embarqué à bord dudit mobile aérien, comprend :

- des antennes d'émission et de réception de signaux électromagnétiques, dites antennes de détection, aptes, d'une part, à émettre un signal électromagnétique sous la forme d'un faisceau d'ondes électromagnétiques orienté vers l'avant dudit mobile aérien, la fréquence dudit signal électromagnétique étant temporellement modulée et, d'autre part, à recevoir un signal électromagnétique réfléchi qui correspond à la réflexion dudit signal électromagnétique émis sur ledit engin volant ;
- une chaîne d'émission - réception partagée entre les antennes de détection et l'au moins une antenne d'altimétrie ;
- des moyens pour former, à partir desdits signaux électromagnétiques émis et réfléchi, un signal d'analyse dont la fréquence correspond à l'écart de fréquences entre les fréquences desdits signaux émis et réfléchi ;
- des moyens pour effectuer une analyse spectrale dudit signal d'analyse, de manière à déterminer au moins une valeur dudit écart de fréquences et à éliminer l'écho de sol ;
- des moyens pour calculer, à partir de la valeur déterminée dudit écart de fréquences, la valeur d'au moins un paramètre d'évolution dudit engin d'interception par rapport audit mobile aérien ; et
- des moyens pour évaluer la direction d'arrivée dudit engin par rapport audit mobile aérien,

et est remarquable :

- en ce que ledit signal électromagnétique émis est un signal sinusoïdal découpé en impulsions, dont la fréquence varie linéairement en fonction du temps selon une loi de modulation prédéterminée, de sorte que ledit signal électromagnétique réfléchi est également un signe sinusoïdal découpé en impulsions, dont la fréquence varie selon la même loi de modulation prédéterminée ; et

- en ce que ledit système comporte :

  ▪ des moyens pour déterminer, à partir au moins de la valeur déterminée dudit paramètre d'évolution et de la direction d'arrivée dudit engin, un ordre d'évitement destiné auxdits moyens automatiques de pilotage, de sorte que ledit mobile aérien réalise automatiquement une manoeuvre d'évitement dudit engin ; et
  ▪ ladite antenne d'altimétrie ;

- et en ce que ledit système réalise de façon exclusive une des actions suivantes :

  ▪ détermination d'un ordre d'évitement destiné auxdits moyens automatiques de pilotage, à l'aide desdites antennes de détection ;
  ▪ mesure de la hauteur dudit mobile aérien au-dessus du sol, à l'aide de ladite antenne d'altimétrie et d'au moins certains des moyens mis en oeuvre pour déterminer ledit ordre d'évitement.

  De préférence, selon l'invention,

- le système comporte quatre antennes de détection ; et
- lesdites antennes de détection sont réparties régulièrement autour d'une même section transversale dudit mobile aérien.

On remarquera que le système d'évitement peut réaliser alternativement une détection de menace et une mesure radio altimétrique. De la sorte, on réalise un gain de masse et de volume.

De façon avantageuse, le système d'évitement peut comporter au moins un commutateur apte à commuter l'émission et la réception d'un signal électromagnétique entre au moins une desdites antennes et ladite antenne d'altimétrie.

La présente invention concerne également un mobile aérien comportant un système d'évitement tel que décrit précédemment.

Les figures du dessin annexé feront bien comprendre comment l'invention peut être réalisée. Sur ces figures, des références identiques désignent des éléments semblables.

Les figures 1 et 2 représentent, sous la forme d'un schéma synoptique, un système d'évitement d'un engin d'interception par un mobile aérien, selon respectivement un premier et un second modes de réalisation conformes à l'invention.

La figure 3 montre, dans une vue de profil schématique, les faisceaux d'ondes de quatre antennes d'émission et de réception et d'une antenne d'altimétrie, montées à bord du mobile aérien, conformément à l'invention. Sur la figure 3, les antennes d'émission et de réception présentent chacune un faisceau d'émission fixe.

La figure 4 est une figure semblable à la figure 3, les antennes d'émission et de réception étant désormais à balayage électronique.

La figure 5 est une vue schématique du mobile aérien de la figure 3, suivant la ligne V-V.

La figure 6 est une vue schématique du mobile aérien de la figure 4, suivant la ligne VI-VI.

La figure 7 est un diagramme qui montre l'évolution temporelle d'un signal impulsionnel émis par le système d'évitement de l'invention accompagné du signal impulsionnel reçu en retour, après réflexion du signal émis sur un engin d'interception.

La figure 8 présente les signaux impulsionnels émis et réfléchi de la figure 7, après leur transformation en signaux continus par le système d'évitement de l'invention.

La figure 9 illustre la loi de modulation en fréquence appliquée au signal impulsionnel émis par le système d'évitement, sur une période d'émission.

La figure 10 représente l'évolution de la fréquence en fonction du temps d'un signal émis et du signal réfléchi correspondant, lorsque la vitesse radiale d'un engin d'interception par rapport au mobile aérien est nulle et que la distance séparant l'engin du mobile est non nulle.

La figure 11 est semblable à la figure 10, la distance séparant un engin d'interception du mobile étant nulle et la vitesse radiale relative étant différente de zéro.

La figure 12, semblable aux figures 10 et 11, décrit l'évolution temporelle de la fréquence d'un signal émis et du signal réfléchi correspondant reçu par le système de l'invention, lorsque la vitesse radiale d'un engin d'interception par rapport au mobile aérien et leur distance de séparation sont non nulles.

La figure 13 montre l'analyse spectrale, par transformée de Fourier, du signal réfléchi de la figure 12, réalisée par le système d'évitement de l'invention.

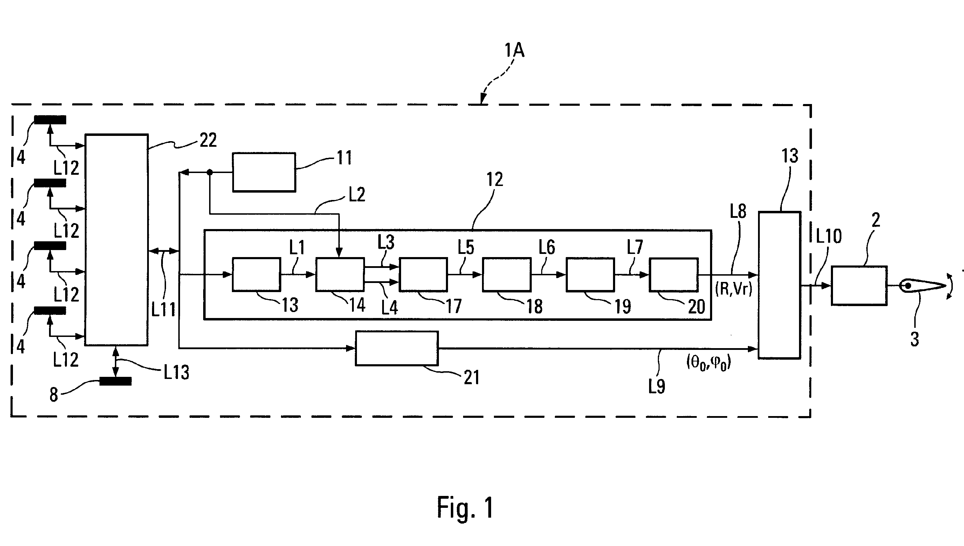

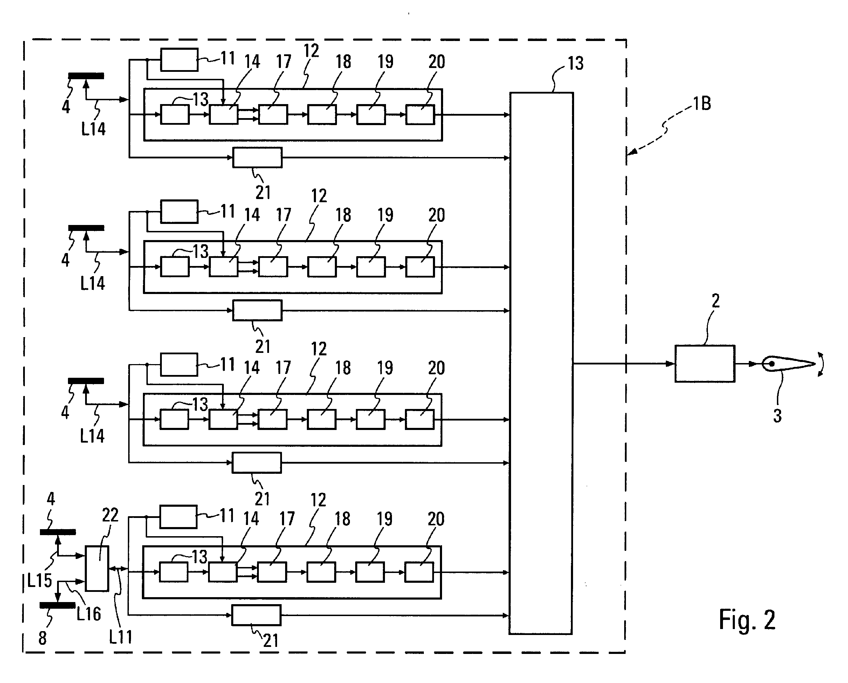

Le système 1 A, 1 B, conforme à l'invention et représenté sous la forme d'un schéma synoptique sur les figures 1 et 2, est destiné à éviter qu'un engin volant assaillant, notamment du type missile, n'intercepte un mobile aérien autonome M, par exemple du type missile. Pour cela, le système d'évitement 1A, 1B engendre un ordre d'évitement qui est transmis à des moyens automatiques de pilotage 2 (par exemple un actionneur commandant une gouverne 3) montés sur le mobile M pour que ce dernier effectue une manoeuvre d'évitement.

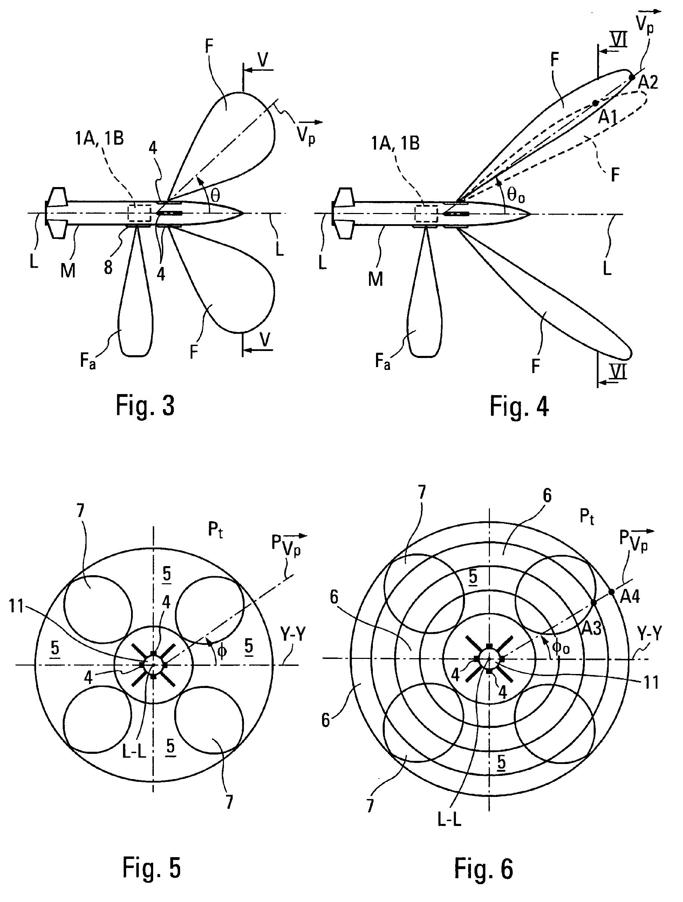

Comme le montrent les figures 1 à 6, le système d'évitement 1 A, 1B comporte quatre antennes d'émission et de réception 4 (désignées par la suite antennes de détection 4) régulièrement réparties autour d'une même section du mobile M. Les quatre antennes 4 sont aptes à émettre des signaux électromagnétiques sous la forme d'un faisceau d'ondes électromagnétiques F, orienté vers l'avant dudit mobile M, qui peut être fixe (figure 3) ou qui peut balayer une portion angulaire déterminée de l'espace (l'antenne est alors dite à balayage électronique) (figure 4). Elles sont également aptes à recevoir de tels signaux électromagnétiques.

Par la suite, pour chacune des antennes de détection 4, la direction d'émission ou de réception d'un signal électromagnétique est repérée, de façon usuelle, par la direction du vecteur de Poynting associé. Celle-ci est définie par un couple d'angles (θ, Φ). L'angle θ est formé entre la direction du vecteur de Poynting Vp d'un signal et l'axe longitudinal L-L du mobile aérien M. L'angle Φ est, quant à lui, défini entre la projection $Pv_p$ du vecteur Poynting Vp sur un plan Pt orthogonal à l'axe L-L, passant par l'antenne 4 considérée, et un axe de référence Y-Y appartenant au plan orthogonal Pt.

Sur les figures 5 et 6, on a représenté le gain 5 en émission de chacune des antennes 4. Dans le cas d'antennes de détection 4 à balayage électronique (figure 6), les anneaux concentriques 6 correspondent aux gains 5 des antennes de détection 4 suivant différents pointages des faisceaux associés, par rapport à l'axe L-L.

Quel que soit le type d'antenne 4, il existe des zones de recouvrement 7 des gains en émission 5. Ces zones de recouvrement 7 sont au nombre de quatre.

Le système d'évitement 1A, 1B comporte également une antenne d'altimétrie 8 dédiée à la mesure de la hauteur du mobile M au-dessus du sol. Elle émet un faisceau d'ondes électromagnétiques Fa orienté vers le sol (figures 3 et 4).

Par la suite, on entend par :

- signal « émis » 9 : un signal électromagnétique émis par une des antennes de détection 4 ; et
- signal « réfléchi » 10 : un signal électromagnétique émis par une des antennes de détection 4, qui a été réfléchi par l'engin d'interception et reçu par une ou plusieurs antennes de détection 4. Il est à noter que le signal réfléchi 10 comporte une partie utile, correspondant au signal effectivement réfléchi par l'engin, et une partie parasite, correspondant à la réflexion du signal émis sur le sol (encore appelée écho de sol). L'écho de sol gêne la détection de la partie utile du signal réfléchi 10. Dans la suite de la description, le signal réfléchi 10 comprend donc une partie utile sur laquelle se superpose l'écho de sol.

Selon l'invention, le système d'évitement 1A, 1B comprend :

- au moins un émetteur 11, par exemple de type tube hyperfréquence, formé pour engendrer un signal électromagnétique 9 destiné à être émis par au moins une des quatre antennes de détection 4 ;
- des moyens 12 pour traiter le signal réfléchi 10 correspondant reçu par au moins une antenne de détection 4 ; et
- des moyens 13 pour déterminer un ordre d'évitement, destiné aux moyens automatiques de pilotage 2 du mobile M.

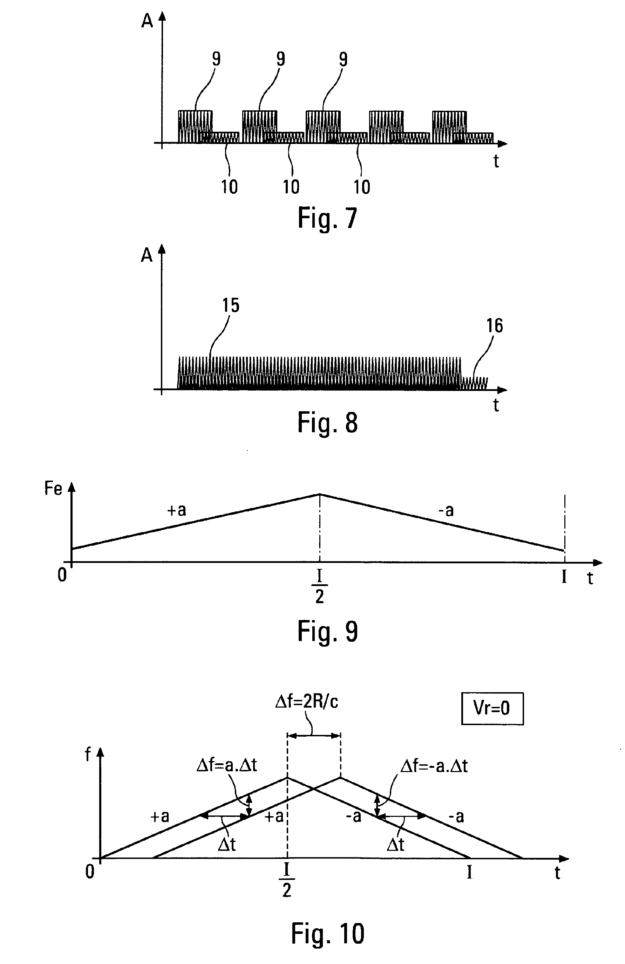

Comme le montre la figure 7 (l'axe des ordonnées représentant l'amplitude A d'un signal), on considère que :

- chaque signal électromagnétique émis 9 par une antenne de détection 4 est une sinusoïde découpée en impulsions, dont la fréquence Fe varie linéairement en fonction du temps selon une loi de modulation prédéterminée. Le découpage en impulsions permet de faire alterner des périodes d'émission et des périodes de silence, durant lesquelles il est possible d'analyser le signal réfléchi 10 correspondant, grâce aux moyens 12, sans être gêné par le signal émis 9 ; et
- l'engin d'interception présente une vitesse radiale Vr par rapport au mobile M et est séparé de ce dernier par une distance R.

La loi de modulation de fréquence de chaque signal émis 9 est par exemple définie de la façon suivante (figure 9) :

- la fréquence Fe du signal émis 9 varie linéairement en fonction du temps suivant une pente de modulation égale à +a (a étant une constante), pendant un premier intervalle temporel d'émission [0 ; I/2 ] (par exemple égal à la moitié de la période d'émission I du signal émis 9 considéré) ; et
- la fréquence Fe varie linéairement en fonction du temps suivant l'opposé de cette pente de modulation +a (soit une pente de modulation -a), pendant un second intervalle temporel d'émission [ I/2 ; I ].

Par ailleurs, le signal réfléchi 10 par l'engin d'interception subit les altérations suivantes par rapport au signal émis 9 correspondant :

- un retard $\Delta t = \dfrac{2R}{c}$, c étant la célérité de la lumière. En effet, comme le montre la figure 10 (pour laquelle Vr = 0), le signal réfléchi 10 présente une translation horizontale (c'est-à-dire selon l'axe du temps t) par rapport au signal émis 9 correspondant, ce qui se traduit par un premier décalage en fréquence $\Delta f = \alpha \Delta t$ sur la pente positive + a et $\Delta f = -\alpha \Delta t$ sur la pente négative -a ; et

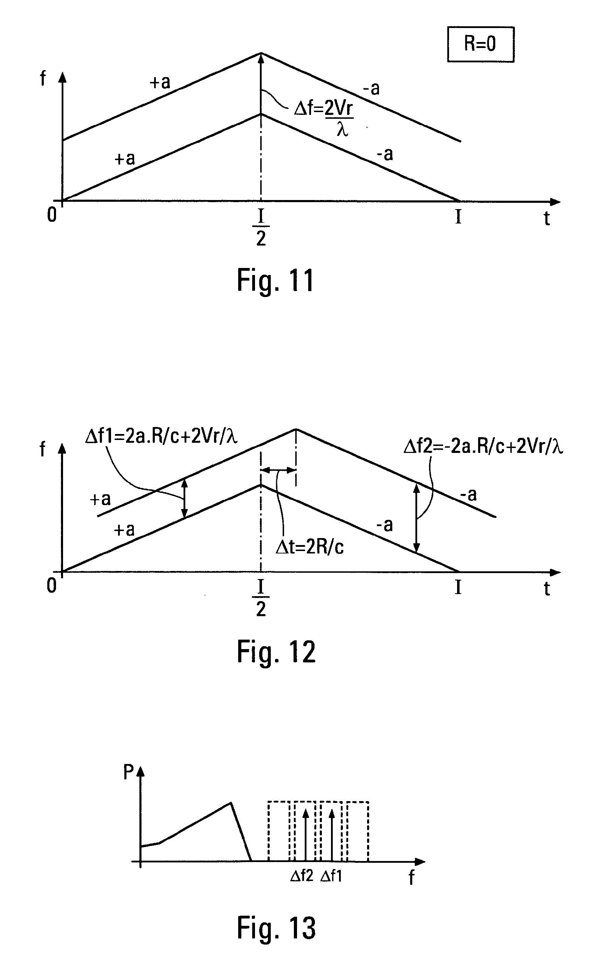

- un second décalage en fréquence $\Delta f = 2\dfrac{Vr}{\lambda}$ (λ étant la longueur d'onde du signal émis 9), qui correspond à une translation verticale (c'est-à-dire selon l'axe des fréquences f) du signal réfléchi 10 par rapport au signal émis 9 comme le montre la figure 11 (pour laquelle R=0).

Ainsi, l'engin d'interception présentant un éloignement R et une vitesse relative Vr par rapport au mobile M, les deux altérations précitées s'additionnent comme illustré sur la figure 12, de sorte que l'écart de fréquences entre la fréquence du signal émis 9 et celle du signal réfléchi 10 est égal à :

- $$\Delta f1 = \frac{2aR}{c} + \frac{2Vr}{\lambda}$$ sur au moins une partie du premier intervalle temporel d'émission (pour lequel la modulation de fréquence présente une pente + a) ;

- et $$\Delta f2 = -\frac{2aR}{c} + \frac{2Vr}{\lambda}$$ sur au moins une partie du second intervalle temporel d'émission (pour lequel la modulation de fréquence présente une pente -a).

Dans le cadre de la présente invention, comme le montrent les figures 1 et 2, les moyens de traitement 12 d'un signal réfléchi 10, reçu par au moins une antenne de détection 4, comportent :

- des moyens 14 pour amplifier le signal réfléchi reçu 10 ;
- des moyens 15 pour transformer chacun des signaux impulsionnels émis 9 et réfléchi 10 en un signal continu C1, C2, qui reste modulé selon la même loi de modulation de fréquence précitée (figure 8). Ces moyens 15 sont reliés aux moyens d'amplification 14 et à l'émetteur 11, par l'intermédiaire respectivement des liaisons L1 et L2 ;
- un mélangeur analogique 16, de type usuel, qui reçoit des moyens 15 le signal émis continu C1 et le signal réfléchi continu C2, par l'intermédiaire des liaisons L3 et L4. Le mélangeur 16 est apte à combiner ensemble ces signaux C1 et C2, de manière à délivrer, en sortie, un signal d'analyse analogique, dont la fréquence correspond à l'écart de fréquences entre la fréquence du signal émis continu C1 et celle du signal réfléchi continu C2 ;
- un convertisseur analogique-numérique 17 qui convertit le signal d'analyse analogique, provenant du mélangeur 16 (liaison L5), en un signal d'analyse numérique ;
- des moyens 18 pour effectuer une analyse spectrale, par transformée de Fourier numérique rapide, du signal d'analyse numérique reçu du convertisseur 17, par l'intermédiaire de la liaison L6. L'analyse spectrale du signal d'analyse permet d'isoler la partie utile du signal réfléchi et d'éliminer l'écho de sol, notamment lorsque l'engin d'interception possède une vitesse par rapport au sol suffisamment élevée et qu'il se dirige vers le mobile M. En outre, une telle analyse spectrale permet également de déterminer les raies spectrales correspondant à $\Delta f1$ et à $\Delta f2$. L'analyse spectrale a ainsi deux fonctions :

- séparer les raies spectrales $\Delta f1$ et $\Delta f2$ de l'écho de sol ; et
- estimer les fréquences $\Delta f1$ et $\Delta f2$. L'estimée de la fréquence $\Delta f1$ (respectivement $\Delta f2$) correspond au numéro d'un filtre Doppler, pour lequel on détecte la raie spectrale $\Delta f1$ (respectivement $\Delta f2$) ; et

- des moyens 19 pour calculer la distance R et la vitesse radiale Vr de l'engin d'interception par rapport au mobile M. Ces moyens de calcul 19 sont reliés aux moyens 18 par l'intermédiaire de la liaison L7, et sont aptes à recevoir la valeur des raies spectrales correspondant à $\Delta f1$ et à $\Delta f2$. A partir des relations suivantes :

- $$R = \frac{c}{4a}\left(\Delta f1 - \Delta f2\right) \; ; \text{ et}$$

- $$Vr = \frac{\lambda}{4}\left(\Delta f1 + \Delta f2\right),$$

les moyens de calcul 19 sont aptes à délivrer, en sortie, la valeur de la distance R et de la vitesse Vr.

Par ailleurs, le système d'évitement 1A, 1B de l'invention comporte également des moyens 20 pour évaluer la direction d'arrivée de l'engin d'interception par rapport audit mobile M en estimant la direction du vecteur de Poynting Vp associé au signal réfléchi 10 (ce qui correspond à la détermination du couple d'angles (θo, Φo) des figures 4 et 6).

Ainsi, l'estimation de l'angle θo, seulement envisageable pour des antennes de détection 4 à balayage électronique, est réalisée, de façon usuelle, par comparaison de deux valeurs de gain A1 et A2 obtenues par deux pointages adjacents du faisceau d'ondes F d'une même antenne de détection 4 (figure 4).

De même, on estime l'angle Φo de la direction d'arrivée par comparaison de deux valeurs de gain A3 et A4, obtenues respectivement par deux antennes de détection 4 dont les faisceaux d'ondes F sont adjacents (figure 6). A la différence de l'estimation de Φo, l'angle Φo peut être déterminé quel que soit le type d'antenne de détection 4 (à faisceau fixe ou à balayage électronique).

De plus, dans le cadre de la présente invention, le système d'évitement 1A, 1B comporte les moyens 13 pour établir un ordre d'évitement à partir des valeurs de R, Vr, θo et Φo reçues des moyens de calcul 19 et des moyens de détermination 20 de la direction d'arrivée de l'engin d'interception, par l'intermédiaire des liaisons L8 et L9. Les moyens 13 sont aptes à délivrer, en sortie (liaison L10), un ordre d'évitement destiné aux moyens automatiques de pilotage 2 du mobile M. Dès la réception de cet ordre d'évitement, les moyens automatiques de pilotage 2 peuvent mettre en oeuvre automatiquement la manoeuvre d'évitement correspondante pour empêcher la destruction du mobile M par l'engin d'interception.

On considère dans la suite que l'émetteur 11, les moyens de traitement 12 et les moyens de détermination 20 d'une direction d'arrivée forment une chaîne d'émission-réception du système d'évitement 1A, 1B.

Dans un premier mode de réalisation de la présente invention représenté sur la figure 1, le système d'évitement 1A comporte une unique chaîne d'émission-réception qui est partagée, au moyen d'un commutateur 21, entre les quatre antennes de détection 4 et l'antenne d'altimétrie 8. Le commutateur 21 comporte une entrée (la chaîne d'émission-réception), formée par la liaison L11, et cinq sorties (les quatre antennes de détection 4 et l'antenne d'altimétrie 8) formées par les liaisons L12 et L13.

Le commutateur 21 permet de commuter, sur l'unique chaîne d'émission-réception, soit les quatre antennes 4 alternativement, soit l'antenne 8.

Dans un second mode de réalisation de la présente invention montré en figure 2, le système d'évitement 1B comporte trois chaînes d'émission réception, qui sont reliées respectivement à trois antennes de détection 4 (liaison L14), et une chaîne d'émission-réception, qui est partagée entre la quatrième antenne de détection 4 et l'antenne d'altimétrie 8 au moyen d'un commutateur 21. Ce dernier comporte une entrée (la chaîne d'émission-réception partagée) formée par la liaison L11 et deux sorties (la quatrième antenne 4 et l'antenne d'altimétrie 8) formées par les liaisons L15 et L16.

Dans ce second mode, les chaînes non partagées alimentent directement les trois antennes de détection 4 associées.

Dans le cadre de la présente invention, quel que soit le mode de réalisation, le système d'évitement 1A, 1B présente, en plus de sa fonction d'évitement, une fonction radio altimétrique (c'est-à-dire qu'il est apte à déterminer la hauteur du mobile M par rapport au sol à l'aide de l'antenne d'altimétrie 8). La fonction de détection de menace et la fonction radio altimétrique s'excluent mutuellement, de sorte que le système 1A, 1B fonctionne soit en mode détecteur de menace, soit en mode radioaltimètre.

Ainsi, la réalisation de mesures radio altimétriques met en oeuvre une chaîne d'émission-réception partagée telle que précédemment décrite.

**Revendications**

1. Procédé d'évitement d'un engin volant d'interception par un mobile aérien (M), ledit mobile aérien (M) comportant :

   - des moyens automatiques de pilotage (2) ;

   - des antennes d'émission et de réception (4) de signaux électromagnétiques, dites antennes de détection, aptes à émettre des signaux électromagnétiques sous la forme d'un faisceau d'ondes électromagnétiques orienté vers l'avant dudit mobile aérien (M) ;
   - au moins une antenne d'altimétrie (8) pour la mesure de la hauteur dudit mobile aérien (M) au-dessus du sol ; et
   - une chaîne d'émission - réception partagée entre les antennes de détection (4) et l'au moins une antenne d'altimétrie (8),

   procédé selon lequel on effectue automatiquement les étapes suivantes :

   - on émet vers l'avant dudit mobile aérien (M), à l'aide d'au moins une desdites antennes de détection (4), au moins un signal électromagnétique (9) dont la fréquence est temporellement modulée ;
   - on reçoit, à l'aide d'au moins une desdites antennes de détection (4), au moins un signal électromagnétique réfléchi (10), qui correspond à la réflexion dudit signal électromagnétique émis (9) sur ledit engin volant ;
   - à partir desdits signaux électromagnétiques émis (9) et réfléchi (10), on forme au moins un signal d'analyse, dont la fréquence correspond à l'écart de fréquences ($\Delta f1$, $\Delta f2$) entre les fréquences desdits signaux émis (9) et réfléchi (10) ;
   - on effectue une analyse spectrale dudit signal d'analyse pour déterminer au moins une valeur dudit écart de fréquences ($\Delta f1$, $\Delta f2$) et pour éliminer l'écho de sol ;
   - à partir de ladite valeur déterminée dudit écart de fréquences déterminée ($\Delta f1$, $\Delta f2$), on calcule la valeur d'au moins un paramètre d'évolution ($R$, $Vr$) dudit engin d'interception par rapport audit mobile aérien (M) et ;
   - on évalue la direction d'arrivée ($\theta o$, $\Phi o$) dudit engin par rapport audit mobile aérien (M),

   **caractérisé :**

   - **en ce que** ledit signal électromagnétique émis (9) est un signal sinusoïdal découpé en impulsions, dont la fréquence varie linéairement en fonction du temps selon une loi de modulation prédéterminée, de sorte que ledit signal électromagnétique réfléchi (10) est également un signal sinusoïdal découpé en impulsions, dont la fréquence varie selon la même loi de modulation prédéterminée ; et
   - **en ce que** l'on effectue exclusivement une des étapes suivantes :

à partir au moins de la valeur déterminée dudit paramètre d'évolution (R, Vr) et de la direction d'arrivée (θo, Φo) dudit engin, on détermine un ordre d'évitement destiné auxdits moyens automatiques de pilotage (2), de sorte que ledit mobile aérien (M) réalise automatiquement une manoeuvre d'évitement dudit engin ;

on mesure la hauteur dudit mobile aérien (M) au-dessus du sol, à l'aide de ladite antenne d'altimétrie (8).

2. Procédé selon la revendication 1, **caractérisé :**

- **en ce que**, selon ladite loi de modulation prédéterminée, la fréquence varie en fonction du temps suivant une pente de modulation prédéfinie (+a), pendant un premier intervalle temporel d'émission, et suivant l'opposé de ladite pente de modulation (-a), pendant un second intervalle temporel d'émission ; et

- **en ce que** ledit écart de fréquences ($\Delta f1$, $\Delta f2$) entre les fréquences desdits signaux émis (9) et réfléchi (10) varie au cours du temps et est défini par les relations suivantes :

$$\Delta f1 = \frac{2aR}{c} + \frac{2Vr}{\lambda}$$ sur au moins une partie dudit premier intervalle temporel ; et

$$\Delta f2 = -\frac{2aR}{c} + \frac{2Vr}{\lambda}$$ sur au moins

une partie dudit second intervalle temporel,

dans lesquelles :

a représente ladite pente de modulation ;

R correspond à la distance séparant ledit mobile aérien dudit engin ;

c est égal à la célérité de la lumière ;

Vr représente la vitesse radiale relative dudit engin par rapport audit mobile aérien ; et

λ correspond à la longueur d'onde dudit signal émis.

3. Procédé selon l'une des revendications 1 ou 2, **caractérisé en ce que** ladite analyse spectrale est une analyse par transformée de Fourier numérique rapide.

4. Procédé selon l'une quelconque des revendications 1 à 3, **caractérisé en ce que**, pour évaluer la direction d'arrivée (θo, Φo) dudit engin par rapport audit mobile aérien (M), on détermine la direction du vecteur de Poynting (Vp) associé audit signal réfléchi (10) en estimant un premier angle (θo), défini entre la direction dudit vecteur de Poynting (Vp) et l'axe longitudinal (L-L) dudit mobile aérien (M), et un second angle (Φo), défini entre la projection ($Pv_p$) dudit vecteur Poynting (Vp) sur un plan (Pt) orthogonal à l'axe longitudinal (L-L) dudit mobile aérien (M), passant par une desdites antennes de détection (4), et un axe de référence (Y-Y) appartenant audit plan orthogonal (Pt).

5. Procédé selon l'une quelconque des revendications 1 à 4, **caractérisé :**

- **en ce que** ledit mobile aérien (M) comporte quatre antennes de détection (4) ; et
- **en ce que** lesdites antennes de détection (4) sont réparties régulièrement autour d'une même section transversale dudit mobile aérien (M).

6. Système d'évitement d'un engin volant d'interception par un mobile aérien, ledit mobile aérien (M) comportant des moyens automatiques de pilotage (2), des antennes d'émission et de réception de signaux électromagnétiques, et au moins une antenne d'altimétrie (8) pour la mesure de la hauteur dudit mobile aérien (M) au-dessus du sol, ledit système, embarqué à bord dudit mobile aérien (M), comprenant :

- des antennes d'émission et de réception (4) de signaux électromagnétiques, dites antennes de détection, aptes, d'une part, à émettre un signal électromagnétique (9) sous la forme d'un faisceau d'ondes électromagnétiques orienté vers l'avant dudit mobile aérien (M), la fréquence dudit signal électromagnétique (9) étant temporellement modulée et, d'autre par, à recevoir un signal électromagnétique réfléchi (10) qui correspond à la réflexion dudit signal électromagnétique émis (9) sur ledit engin volant ;
- une chaîne d'émission - réception partagée entre les antennes de détection (4) et l'au moins une antenne d'altimétrie (8) ;
- des moyens (17) pour former, à partir desdits signaux électromagnétiques émis (9) et réfléchi (10), un signal d'analyse dont la fréquence correspond à l'écart de fréquences ($\Delta f1$, $\Delta f2$) entre les fréquences desdits signaux émis (9) et réfléchi (10) ;
- des moyens (18) pour effectuer une analyse spectrale dudit signal d'analyse, de manière à déterminer au moins une valeur dudit écart de fréquences ($\Delta f1$, $\Delta f2$) et à éliminer l'écho de sol ;
- des moyens (19) pour calculer, à partir de la valeur déterminée dudit écart de fréquences, la valeur d'au moins un paramètre d'évolution (R, Vr) dudit engin d'interception par rapport audit mobile aérien (M) ; et

- des moyens (20) pour évaluer la direction d'arrivée (θo, Φo) dudit engin par rapport audit mobile aérien (M),

**caractérisé :**

- **en ce que** ledit signal électromagnétique émis (9) est un signal sinusoïdal découpé en impulsions, dont la fréquence varie linéairement en fonction du temps selon une loi de modulation prédéterminée, de sorte que ledit signal électromagnétique réfléchi (10) est également un signal sinusoïdal découpé en impulsions, dont la fréquence varie selon la même loi de modulation prédéterminée ; et
- **en ce que** ledit système comporte :

  ▪ des moyens (13) pour déterminer, à partir au moins de la valeur déterminée dudit paramètre d'évolution (R, Vr) et de la direction d'arrivée (θo, Φo) dudit engin, un ordre d'évitement destiné auxdits moyens automatiques de pilotage (2), de sorte que ledit mobile aérien (M) réalise automatiquement une manoeuvre d'évitement dudit engin ; et
  ▪ ladite antenne d'altimétrie (8) ;

- **en ce que** ledit système réalise de façon exclusive une des actions suivantes :

  ▪ détermination d'un ordre d'évitement destiné auxdits moyens automatiques de pilotage (2), à l'aide desdites antennes de détection (4) ;
  ▪ mesure de la hauteur dudit mobile aérien (M) au-dessus du sol, à l'aide de ladite antenne d'altimétrie (8) et d'au moins certains des moyens mis en oeuvre pour déterminer ledit ordre d'évitement.

**7.** Système selon la revendication 6,
**caractérisé :**

- **en ce qu'**il comporte quatre antennes de détection (4) ; et
- **en ce que** lesdites antennes de détection (4) sont réparties régulièrement autour d'une même section transversale dudit mobile aérien (M).

**8.** Système selon la revendication 7,
**caractérisé en ce qu'**il comporte au moins un commutateur (21) apte à commuter l'émission et la réception d'un signal électromagnétique (9, 10) entre au moins une desdites antennes de détection (4) et ladite antenne d'altimétrie (8).

**9.** Mobile aérien,

**caractérisé en ce qu'**il comporte un système d'évitement (1 A, 1 B) tel que spécifié sous l'une des revendications 6 à 8.

**Patentansprüche**

**1.** Verfahren zum Ausweichen einer fliegenden Abfangrakete durch ein Flugzeug (M), wobei das Flugzeug (M) umfasst:

- automatische Steuermittel (2);
- Sende- und Empfangsantennen (4) für elektromagnetische Signale, die als Detektionsantennen bezeichnet werden, die eingerichtet sind, elektromagnetische Signale in Form eines Strahls aus elektromagnetischen Wellen auszusenden, der vor das Flugzeug (M) ausgerichtet ist;
- zumindest eine Höhenmessungsantenne (8) zur Messung der Höhe des Flugzeugs (M) über dem Boden; und

einen Sende-Empfang-Kanal, der zwischen den Detektionsantennen (4) und der zumindest einen Höhenmessungsantenne (8) geteilt ist,
gemäß dem automatisch die folgenden Schritte durchgeführt werden:

- Aussenden von zumindest einem elektromagnetischen Signal (9), dessen Frequenz zeitlich moduliert ist, vor das Flugzeug (M) mithilfe von zumindest einer der Detektionsantennen (4);
- Empfangen von zumindest einem reflektierten, elektromagnetischen Signal (10), das der Reflektion des ausgesendeten, elektromagnetischen Signals (9) auf der fliegenden Rakete entspricht, mithilfe von zumindest einer der Detektionsantennen (4);
- ausgehend von dem ausgesendeten (9) und reflektierten (10) elektromagnetischen Signal Bilden von zumindest einem Analysesignal, dessen Frequenz der Abweichung zwischen den Frequenzen ($\Delta f1$, $\Delta f2$) des ausgesendeten (9) und reflektierten (10) Signals entspricht;
- Durchführen einer Spektralanalyse des Analysesignals, um zumindest einen Wert der Abweichung der Frequenzen ($\Delta f1$, $\Delta f2$) zu bestimmen und das Echo des Bodens zu beseitigen;
- ausgehend von dem bestimmten Wert der Abweichung der Frequenzen ($\Delta f1$, $\Delta f2$) Berechnen des Werts von zumindest einem Evolutionsparameter (R, Vr) der Abfangrakete mit Bezug auf das Flugzeug (M); und
- Auswerten der Ankunftsrichtung ($\theta_0$, $\square_0$) der Rakete mit Bezug auf das Flugzeug (M),
**dadurch gekennzeichnet:**
- **dass** das ausgesendete, elektromagnetische Signal (9) ein in Impulse zerteiltes Sinussignal ist, dessen Frequenz linear als Funktion der Zeit gemäß einer vorbestimmten Modulationsregel variiert ist, so dass das reflektierte, elektromagnetische Signal (10) ebenfalls ein in Impulse zerteiltes Sinussignal ist, dessen Frequenz gemäß der gleichen, vorbestimmten Modulationsregel variiert ist; und

- **dass** ausschließlich einer der folgenden Schritte ausgeführt wird:

■ ausgehend von zumindest dem vorbestimmten Wert des Evolutionsparameters (R, Vr) und der Ankunftsrichtung der Rakete ($\theta_0$, $\square_0$) Bestimmen eines Befehls zum Ausweichen, der für die automatischen Steuermittel (2) vorgesehen ist, so dass das Flugzeug (M) automatisch ein Manöver zum Ausweichen der Rakete ausführt;

■ Messen der Höhe des Flugzeugs (M) über dem Boden mithilfe der Höhenmessungsantenne (8).

**2.** Verfahren nach Anspruch 1, **dadurch gekennzeichnet:**

- **dass** gemäß der vorbestimmten Modulationsregel, die Frequenz als Funktion der Zeit gemäß einer Steigung der vordefinierten Modulation (+a) während eines ersten Zeitintervalls des Aussendens und gemäß der entgegengesetzten Steigung der Modulation (-a) während eines zweiten Zeitintervalls des Aussendens variiert wird; und

- **dass** die Abweichung der Frequenzen ($\Delta$f1, $\Delta$f2) zwischen den Frequenzen des ausgesendeten (9) und reflektierten Signals (10) in Laufe der Zeit variiert wird und durch die folgenden Beziehungen definiert ist:

$$\Delta f1 = \frac{2aR}{c} + \frac{2Vr}{\lambda}$$ auf zumindest einem Teil des ersten Zeitintervalls;

$$\Delta f2 = -\frac{2aR}{c} + \frac{2Vr}{\lambda}$$ auf zumindest einem Teil des zweiten Zeitintervalls;

wobei:

■ a die Steigung der Modulation darstellt;

■ R einem Abstand entspricht, der das Flugzeug von der Rakete trennt;

■ c gleich der Lichtgeschwindigkeit ist;

■ Vr die relative Radialgeschwindigkeit der Rakete mit Bezug auf das Flugzeug darstellt; und

■ $\square$ einer Wellenlänge des ausgesendeten Signals entspricht.

**3.** Verfahren nach einem der Ansprüche 1 oder 2, **dadurch gekennzeichnet, dass** die Spektralanalyse eine Analyse durch schnelle, numerische Fourier-Transformation ist.

**4.** Verfahren nach einem der Ansprüche 1 bis 3, **dadurch gekennzeichnet, dass** zum Auswerten der Ankunftsrichtung ($\theta_0$, $\square_0$) der Rakete mit Bezug auf das Flugzeug (M) die Richtung des Poynting-Vektors (Vp), der zu dem reflektierten Signal (10) gehört, bestimmt wird, indem ein erster Winkel ($\theta_0$), der zwischen der Richtung des Poynting-Vektors (Vp) und der Längsachse (L-L) des Flugzeugs (M) definiert ist, und ein zweiter Winkel ($\square_0$) geschätzt werden, der zwischen der Projektion ($P_{vp}$) des Poynting-Vektors (Vp) auf einer Ebene ($P_t$), die orthogonal zu der Längsachse (L-L) des Flugzeugs (M) ist, welche durch eine der Detektionsantennen (4) verläuft, und einer Referenzachse (Y-Y) definiert ist, die zu der orthogonalen Ebene (Pt) gehört.

**5.** Verfahren nach einem der Ansprüche 1 bis 4, **dadurch gekennzeichnet:**

- **dass** das Flugzeug (M) vier Detektionsantennen (4) aufweist, und
- **dass** die Detektionsantennen (4) gleichmäßig um denselben transversalen Abschnitt des Flugzeugs (M) verteilt sind.

**6.** System zum Ausweichen einer fliegenden Abfangrakete durch ein Flugzeug, wobei das Flugzeug (M) automatische Steuermittel (2), Sende- und Empfangsantennen für elektromagnetische Signale und zumindest eine Höhenmessungsantenne (8) zum Messen der Höhe des Flugzeugs (M) über dem Boden aufweist, wobei das System, das an Bord des Flugzeugs (M) aufgenommen ist, umfasst:

- Sende- und Empfangsantennen (4) für elektromagnetische Signale, die als Detektionsantennen bezeichnet werden, die eingerichtet sind, einerseits ein elektromagnetisches Signal (9) in Form eines Strahls aus elektromagnetischen Wellen, der vor das Flugzeug (M) ausgerichtet ist, auszusenden, wobei die Frequenz des elektromagnetischen Signals (9) zeitlich moduliert ist, und andererseits ein reflektiertes, elektromagnetisches Signal (10) zu empfangen, das einer Reflektion des ausgesendeten, elektromagnetischen Signals (9) auf der fliegenden Rakete entspricht;

- einen Sende-Empfang-Kanal, der zwischen den Detektionsantennen (4) und der zumindest einen Höhenmessungsantenne aufgeteilt (8) ist;

- Mittel (17) zum Bilden eines Analysesignals, dessen Frequenz der Abweichung der Frequenzen (Δf1, Δf2) zwischen den Frequenzen des ausgesendeten (9) und reflektierten (10) Signals entspricht, ausgehend von dem ausgesendeten (9) und reflektierten (10), elektromagnetischen Signal;
- Mittel (18) zum Ausführen einer Spektralanalyse des Analysesignals, um so zumindest den einen Wert der Abweichung der Frequenzen (Δf1, Δf2) zu bestimmen und das Echo des Bodens zu beseitigen;
- Mittel (19) zum Berechnen des Werts von zumindest einem Evolutionsparameter (R, Vr) der Abfangrakete mit Bezug auf das Flugzeug (M) ausgehend von dem bestimmten Wert der Abweichung der Frequenzen; und
- Mittel (20) zum Auswerten der Ankunftsrichtung ($\theta_0$, $\square_0$) der Rakete mit Bezug auf das Flugzeug (M);

**dadurch gekennzeichnet:**

- **dass** das ausgesandte, elektromagnetische Signal (9) ein in Impulse zerteiltes Sinussignal ist, dessen Frequenz linear als Funktion der Zeit gemäß einer vorbestimmten Modulationsregel variiert ist, so dass das reflektierte, elektromagnetische Signal (10) ebenfalls ein in Impulse zerteiltes Sinussignal ist, dessen Frequenz gemäß der gleichen vorbestimmten Modulationsregel variiert ist,
- und **dass** das System umfasst:

  ▪ Mittel (13), um ausgehend von zumindest einem Wert, der aus dem Evolutionsparameter (R, Vr) und der Ankunftsrichtung ($\theta_0$, $\square_0$) der Rakete bestimmt ist, einen Befehl zum Ausweichen zu bestimmen, der für die automatischen Steuermittel (2) vorgesehen ist, so dass das Flugzeug (M) automatisch ein Manöver zum Ausweichen der Rakete ausführt; und
  ▪ die Höhenmessungsantenne (8);

- **dass** das System ausschließlich eine der folgenden Handlungen ausführt:

  ▪ Bestimmen eines Befehls zum Ausweichen, der für die automatischen Steuermittel (2) vorgesehen ist, mithilfe der Detektionsantennen (4);
  ▪ Messen der Höhe des Flugzeugs (M) über dem Boden mithilfe der Höhenmessungsantenne (8) und zumindest bestimmten Mitteln, die zum Bestimmen des Befehls zum Ausweichen eingesetzt werden.

7. System nach Anspruch 6, **dadurch gekennzeichnet:**

   - **dass** es vier Detektionsantennen (4) aufweist; und
   - **dass** die Detektionsantennen (4) gleichmäßig um denselben transversalen Abschnitt des Flugzeugs (M) verteilt sind.

8. System nach Anspruch 7, **dadurch gekennzeichnet, dass** es zumindest einen Kommutator (21) umfasst, der eingerichtet ist, das Senden und Empfangen eines elektromagnetischen Signals (9, 10) zwischen zumindest den Detektionsantennen und der Höhenmessungsantenne (8) zu vertauschen.

9. Flugzeug, **dadurch gekennzeichnet, dass** es ein System zum Ausweichen (1A, 1 B) aufweist, wie in einem der Ansprüche 6 bis 8 angegeben.

**Claims**

1. A method for avoiding a flying intercepting vehicle by an airborne moving body (M), said airborne moving body (M) comprising:

   - automatic piloting means (2);
   - emitting and receiving antennas (4) for electromagnetic signals, called detection antennas, able to emit electromagnetic signals under the form of a beam of electromagnetic waves pointed ahead of said airborne moving body (M);
   - at least one altimetry antenna (8) for measuring the height of said airborne moving body (M) above the ground; and
   - an emitting-receiving chain shared between the detection antennas (4) and the at least one altimetry antenna (8),

   wherein the following steps are automatically carried out:

   - by means of at least one of said detection antennas (4), at least one electromagnetic signal (9) is emitted ahead of the airborne moving body (M), the frequency of which is temporally modulated;
   - by at least one of said detection antennas (4), at least one reflected electromagnetic signal (10) is received, corresponding to the reflection of said electromagnetic signal emitted (9) on said intercepting vehicle;
   - from said emitted and reflected electromagnetic signals (9, 10), at least one analysis signal is formed, the frequency of which corresponds to the deviation of frequencies (Δf1, Δf2) between the frequencies of said emitted (9) and reflected (10) signals;

- a spectrum analysis of said analysis signal is carried out for determining at least one value of said deviation of frequencies ($\Delta f1$, $\Delta f2$ ) and for eliminating the ground echo;

- from said determined value of said deviation of determined frequencies ($\Delta f1$, $\Delta f2$ ), the value is calculated of at least one evolution parameter ($R$, $Vr$) for said intercepting vehicle relative to said airborne moving body (M); and

- the incoming direction ($\theta o$, $\phi o$) of said vehicle is evaluated relative to said airborne moving body (M),

**characterized:**

- **in that** said emitted electromagnetic signal (9) is a sinusoidal signal being cut in pulses, the frequency of which varies linearly as a function of the time according to a predetermined modulation law, in such a way that said reflected electromagnetic signal (10) is also a sinusoidal signal being cut in pulses, the frequency of which varies according to the same predetermined modulation law; and

- **in that** the following steps are further exclusively carried out:

• from at least the determined value of said evolution parameter ($R$, $Vr$) and the incoming direction ($\theta o$, $\phi o$) of said vehicle, an order of avoidance is determined provided for said automatic piloting means (2), in such a way that said airborne moving body (M) automatically carries out an avoidance maneuver for said vehicle;

• the height of said airborne moving body (M) above the ground is measured by said at least one altimetry antenna (8).

**2.** The method of claim 1, **characterized:**

- **in that**, according to said predetermined modulation law, the frequency varies as a function of the time according to a predefined modulation slope (+$a$), during a first time interval of emission, and according to the opposite of said modulation slope (-$a$), during a second time interval of emission; and

- **in that** frequency deviation ($\Delta f1$, $\Delta f2$) between the frequencies of said emitted (9) and reflected (10) signals varies in the course of time and is defined by the following relationships:

$$\bullet \; \Delta f1 = \frac{2aR}{c} + \frac{2Vr}{\lambda} \text{ on at least one part}$$

of said first time interval; and

$$\bullet \; \Delta f2 = -\frac{2aR}{c} + \frac{2Vr}{\lambda} \text{ on at least one}$$

part of said second time interval;

wherein:

• $a$ represents said modulation slope;
• R corresponds to the distance separating said moving body from said vehicle;
• $c$ is equal to the speed of light;
• $Vr$ represents the relative radial speed of said vehicle with respect to said moving body; and
• $\lambda$ corresponds to the wavelength of said emitted signal.

**3.** The method according to any of claims 1 or 2, **characterized in that** said spectrum analysis is a fast digital Fourier transform analysis.

**4.** The method according to any of claims 1 to 3, **characterized in that**, for evaluating the incoming direction ($\theta o$, $\phi o$) of said vehicle relative to said airborne moving body (M), the direction of the Poynting vector ($V_p$) associated with said reflected signal (10) is determined by estimating a first angle ($\theta o$), defined between the direction of said Poynting vector ($V_p$) and the longitudinal axis (L-L) of said airborne moving body (M), and a second angle ($\phi o$), defined between the projection ($Pv_p$) of said Poynting vector ($V_p$) on a plane ($P_r$) orthogonal to the longitudinal axis (L-L) of said airborne moving body (M), crossing one of said detection antennas (4), and a reference axis (Y-Y) belonging to said orthogonal plane ($P_t$).

**5.** The method according to any of claims 1 to 4, **characterized:**

- **in that** said airborne moving body (M) comprises four detection antennas (4); and
- **in that** said detection antennas (4) are regularly distributed around one single same transversal section of said airborne moving body (M).

**6.** A system for avoiding a flying intercepting vehicle by an airborne moving body (M), said airborne moving body (M) comprising automatic piloting means (2), emission and reception antennas (4) for electromagnetic signals and at least one altimetry antenna (8) for measuring the height of said airborne moving body (M) above the ground,

said system embedded on board said airborne moving body (M) comprising:

- emitting and receiving antennas (4) for electromagnetic signals, called detection antennas, able, on the one hand, to emit electromagnetic signals (9) under the form of a beam of electromagnetic waves pointed ahead of said airborne moving body (M), the frequency of said electromagnetic signals (9) being temporally modulated, and on the other hand, to receive a reflected signal (10) corresponding to the reflection of said electromagnetic signals emitted (9) on said intercepting vehicle;

- a emitting-receiving chain shared between the detection antennas (4) and the at least one altimetry antenna (8);

- means (17) for forming, from said emitted (9) and reflected (10) electromagnetic signals, an analysis signal the frequency of which corresponds to the frequency deviation ($\Delta f1$, $\Delta f2$) between the frequencies of said emitted (9) and reflected (10) signals;

- means (18) for carrying out a spectrum analysis of said analysis signal, in such a way as to determine at least one value of said frequency deviation ($\Delta f1$, $\Delta f2$) and to eliminate the ground echo;

- means (19) for calculating, from the determined value of said frequency deviation, the value of at least one evolution parameter ($R$, $Vr$) of said intercepting vehicle relative to said airborne moving body (M); and

- means (20) for evaluating the incoming direction ($\theta o, \phi o$) of said vehicle relative to said airborne moving body (M),

**characterized:**

- **in that** said emitted electromagnetic signal (9) is a sinusoidal signal being cut in pulses, the frequency of which varies linearly as a function of the time according to a predetermined modulation law, in such a way that said reflected electromagnetic signal (10) is also a sinusoidal signal being cut in pulses, the frequency of which varies according to the same predetermined modulation law; and

- **in that** said system comprises:

• means (13) for determining, from at least the determined value of said evolution parameter ($R$, $Vr$) and the incoming direction ($\theta o, \phi o$) of said vehicle, an order of avoidance intended for said automatic piloting means (2), in such a way that said airborne moving body (M) automatically carries out an avoiding maneuver for said vehicle; and
• said altimetry antenna (8); and

- **in that** said system comprises exclusively carries out one of the following actions:

• determining an order of avoidance intended for said automatic piloting means (2), by means of said detection antennas (4);
• measuring the height of said airborne moving body (M) above the ground, by means of said altimetry antenna (8) and of at least some of the means implemented for determining said order of avoidance.

**7.** The system according to claim 6, **characterized:**

- **in that** it comprises four detection antennas (4); and
- **in that** said detection antennas (4) are regularly distributed around one single same transversal section of said airborne moving body (M).

**8.** The system according to claim 7, **characterized in that** it comprises at least one switch (21) being able to switch the emission and the reception of an electromagnetic signal (9, 10) between at least one of said detection antennas (4) and said altimetry antenna (8).

**9.** An airborne moving body, **characterized in that** it comprises an avoidance system (1A, 1B) such as specified in any of claims 6 to 8.

Fig. 1

Fig. 2

Fig. 3

Fig. 4

Fig. 5

Fig. 6

Fig. 7

Fig. 8

Fig. 9

Fig. 10

R=0

Fig. 11

Fig. 12

Fig. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008134815 A
- US 20080100493 A
- US 20060012511 A
- US 6147638 A
- US 20090040097 A

**Littérature non-brevet citée dans la description**

- Radar Waveform for Automotive Radar Systems. **HERMANN ROHLING et al.** Radar Conference. IEEE, 2008